# EUROPEAN PATENT SPECIFICATION

(11) **EP 3 397 534 B1**
(45) Date of publication and mention of the grant of the patent: **21.08.2019**
(21) Application number: 16829312.4
(22) Date of filing: 09.12.2016
(51) Int. Cl.: B60T 11/21

(54) **PRESSURE BALANCING SYSTEM FOR MASTER CYLINDERS OF BRAKING SYSTEMS AND OPERATING METHOD THEREOF**
DRUCKAUSGLEICHSYSTEM FÜR DOPPEL-GEBERZYLINDEREINHEIT EINES BREMSSYSTEMS UND METHODE DESSEN BETRIEBS
SYSTEME DE BALANCEMENT DE PRESSION DANS UN CYLINDRE MAITRE D'UNE INSTALLATION DE FREINAGE ET METODE D'EMPLOI.

(30) Priority: 29.12.2015 IT UB20159449
(43) Date of publication of application: 07.11.2018
(73) Proprietor: VHIT S.p.A., 26010 Offanengo (CR) (IT)
(72) Inventor: CADEDDU, Leonardo, 26010 Offanengo (cr) (IT)
(74) Representative: Bee, Joachim
(86) International application number: PCT/IB2016/057487
(87) International publication number: WO 2017/115189

(56) References cited:
- EP-A2- 0 200 387
- WO-A1-2006/103049
- WO-A2-2012/095767

## Description

### Technical Field

The present invention generally relates to a pressure balancing system for tandem master cylinders.

More particularly, the invention relates to a pressure balancing system of the so-called "stroke controlled" type for a pair of tandem master cylinders of a braking system of a farm vehicle.

The present invention also relates to a method of balancing control pressures generated by tandem master cylinders.

### Prior Art

Use of assemblies consisting of two master cylinders for braking systems of farm vehicles is widely known. Typically, in farm vehicles, and more particularly in tractors, a first and a second pedal, each connected to a respective master cylinder, are indeed used for controlling braking of a left rear wheel and a right rear wheel, respectively.

A braking system configured in that manner allows operating according to a braking modality known as "steering-by-brake". According to such a braking modality, when the driver acts on one pedal only, the braking system causes braking on the corresponding rear wheel only, thereby enabling the steering of the farm vehicle. When, on the contrary, the driver acts on both pedals, the braking system causes braking of both rear wheels.

Typically, braking systems of farm vehicles are also equipped with a balancing circuit, so that, when both pedals are acted upon, a "balanced braking" (that is, with substantially the same intensity) is obtained on both rear wheels.

In order to meet the present regulations, requiring that farm vehicles capable of travelling at a speed exceeding 40 km/h are equipped with a double braking circuit, the braking systems for farm vehicles of the kind illustrated above provide moreover for using tandem master cylinders, i.e. master cylinders including two sections each capable of acting upon a respective braking circuit. Thanks to a solution of this kind, a breakage concerning one of the two braking circuits does not affect the operation of the other braking circuit.

For instance, document WO2006103049 in the name of the Applicant discloses a braking system including a pair of tandem master cylinders. Each one of those master cylinders includes two pistons defining two sections, of which a first section controls braking of the front brakes and a second section controls braking of the respective rear brake. The system includes a first balancing duct, arranged to connect the first sections of the tandem master cylinders together, and a second balancing duct, arranged to connect the second sections of the tandem master cylinders together. Balancing of the pressures generated in both sections of the tandem master cylinders is actuated by means of valves connected between the sections of the master cylinders and the respective balancing ducts. Such valves consist of stationary valve seats, formed in the body of the tandem master cylinder, and of sealing gaskets provided in the pistons, which gaskets, by moving together with the pistons, after a predetermined stroke cooperate with the valve seats thereby causing the valves to open or to close.

The pressure balancing disclosed in the document mentioned above is a so-called "stroke controlled" balancing, since it is mechanically actuated when the pistons operating in the master cylinders travel a predetermined initial stroke.

A balancing of this kind has a high reliability, yet generally it gives rise to the problem of an excessive axial size. Actually, the sealing gaskets provided in the pistons must be slidable inside the master cylinders, in order to enable the balancing ducts to communicate with the respective sections of the tandem master cylinders over the whole piston strokes. Such a constraint entails that the lengths of the pistons and the tandem master cylinders are greater than the lengths required in the absence of the balancing function.

For instance, a tandem master cylinder with a stroke controlled balancing function, like the cylinder disclosed in the document mentioned above, requires for each section a length that, with respect to a tandem cylinder without the balancing function, is increased by an amount substantially equal to the piston stroke. Such a length increase is required to enable opening the balancing valves over the whole piston strokes.

The Applicant has noticed that tandem master cylinders equipped with the stroke controlled balancing function have the problem that they have an axial size greater than that required by tandem master cylinders without the stroke controlled balancing function. Such a problem is of particular relevance especially in farm vehicles, where the need to reduce the axial sizes of the devices installed therein is more and more felt.

Moreover, solutions aimed at reducing the axial size are known in the field of the braking systems. An example is the hydraulic brake booster disclosed in document EP0200387, which comprises, within a hollow body, a piston having a front and a rear portion, a first chamber and a second chamber. The brake booster has a duct formed in the hollow body in correspondence of the front piston portion and communicating with a tubular duct within the hollow body.

In the field of balancing systems for non-tandem master cylinders, document WO2012095767 in the name of the Applicant discloses use of a balancing duct formed inside a pin located inside the master cylinder and including a valve for closing the balancing duct, which valve is arranged to be opened by the stroke of the piston of the master cylinder.

### Description of the invention

It is an object of the present invention to provide a pressure balancing system for tandem master cylinders, which overcomes the problems mentioned above of the prior art.

According to the present invention, this object is achieved by means of a pressure balancing system as claimed.

The claims are integral part of the technical teaching provided herein in respect of the invention.

The following synthetic description of the invention is given in order to provide a basic understanding of some aspects of the invention.

This synthetic description is not an exhaustive description and, as such, it is not to be intended as being suitable for identifying key or critical elements of the invention, or for defining the object of the invention. It only aims at setting forth some concepts of the invention in simplified form, as an anticipation of the detailed description included below.

In accordance with a feature of the present invention, a pressure balancing system for tandem master cylinders includes a primary balancing system including a primary balancing duct ending in the master cylinder at a region occupied by a secondary plunger when the latter is in rest position, i.e. when a brake pedal associated with the master cylinder is not being actuated.

In accordance with another feature of the present invention, the primary balancing system includes a primary balancing O-ring arranged to cooperate in fluid-tight manner with a surface of the secondary plunger so as to form a primary balancing valve between the primary balancing duct and a primary chamber of the master cylinder. Such a valve is closed when the secondary plunger is in rest position and opens when the secondary plunger travels a predetermined portion of its stroke, such that it no longer cooperates in fluid-tight manner with the primary balancing O-ring.

In accordance with a further feature of the present invention, the pressure balancing system includes a secondary balancing system including a secondary balancing duct formed within a secondary spring preloading pin and having at least one radial hole at an end thereof located near a secondary preload case.

In accordance with yet another feature of the present invention, the secondary balancing system includes a secondary balancing O-ring fixedly connected with the secondary preload case. Such an O-ring cooperates in fluid-tight manner with the at least one radial hole of the secondary balancing duct, so as to form a secondary balancing valve between the secondary balancing duct and a secondary chamber of the master cylinder. The secondary balancing valve is closed when the secondary plunger is in an initial rest position and opens when the secondary plunger travels a predetermined portion of its stroke such that the secondary balancing O-ring does not obstruct the at least one radial hole.

### Brief Description of the Figures

The above and other features and advantages of the invention will become apparent from the following description of a preferred embodiments made by way of non-limiting example with reference to the accompanying Figure.

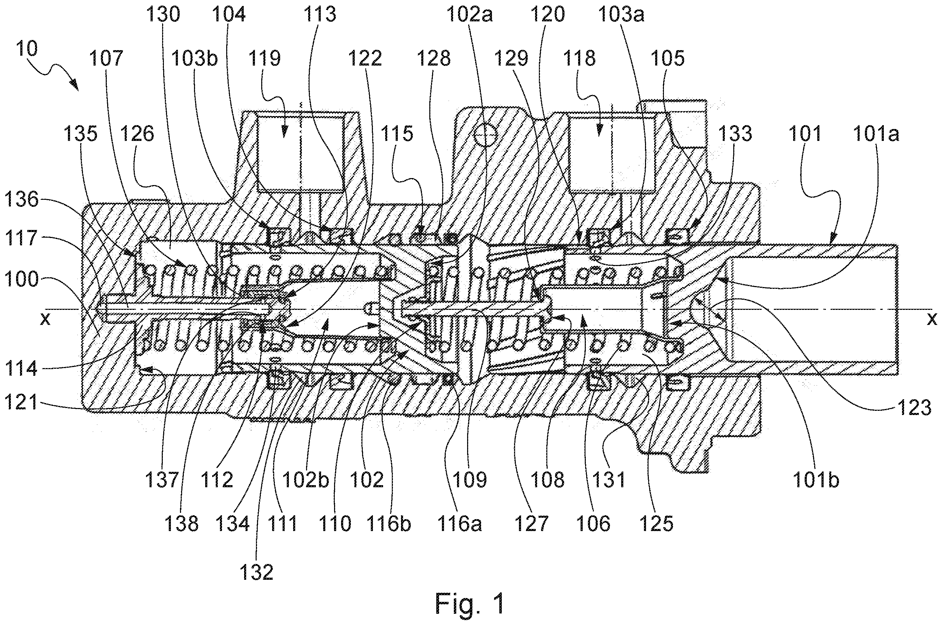

Fig. 1 is a longitudinal sectional view of a tandem master cylinder

### Description of a Preferred Embodiment

Referring to Fig. 1, there is shown, in longitudinal sectional view, a tandem master cylinder 10 comprising a pressure balancing system according to the present invention.

Preferably, said tandem master cylinder belongs to an assembly comprising two tandem master cylinders formed, for instance, in a single body and having parallel longitudinal axes.

In accordance with other embodiments, the tandem master cylinders of the assembly could be formed in separate bodies.

The tandem master cylinders of the assembly are substantially identical and therefore the following description relates to only one of the tandem master cylinders.

A tandem master cylinder 10 equipped with the pressure balancing system according to the present invention includes a hollow body 100, a primary plunger 101 and a secondary plunger 102, which plungers are slidably mounted in hollow body 100 and define, in hollow body 100, a primary chamber 125 and a secondary chamber 126, respectively, which are separated from each other in fluid-tight manner.

Plungers 101, 102 and chambers 125, 126 advantageously have a cylindrical shape with circular cross-sections developing about a longitudinal axis X - X, whereby they are aligned and mutually coaxial.

Primary and secondary chambers 125, 126 are arranged to contain a primary fluid and a secondary fluid, respectively, coming from a primary supply circuit and a secondary supply circuit, respectively.

In accordance with the present invention, the primary and secondary supply circuits, supplying the primary chamber of each of the two tandem master cylinders of the assembly and the secondary chamber of each of the two tandem master cylinders of the assembly, respectively, are independent from each other, so as to ensure braking in case of breakage of one of the supply circuits.

The primary and secondary fluids within primary and secondary chambers 125, 126 have a primary and a secondary control pressure, respectively, which depends on an actuating force applied to a pedal associated with the tandem master cylinder.

The balancing system of each tandem master cylinder of the assembly comprises a primary balancing system and a secondary balancing system.

More particularly, the primary balancing system is arranged to obtain balancing between the primary control pressure present in the primary chamber of one tandem master cylinder and the corresponding primary control pressure in the other tandem master cylinder of the assembly.

The secondary balancing system is instead arranged to perform balancing between the secondary control pressure present in the secondary chamber of one tandem master cylinder and the corresponding secondary control pressure of the other tandem master cylinder of the assembly.

Primary plunger 101 of tandem master cylinder 10 is connected in known manner with a push rod (not shown) in turn connected to the pedal (not shown), and is kept spaced from secondary plunger 102 preferably by means of a primary spring 106. In turn, secondary plunger 102 is kept spaced from a bottom 135 of hollow body 100 preferably by means of a secondary spring 107.

Primary plunger 101 is associated with the respective push rod in known manner, for instance through a rounded hollow 123, for instance a hollow with concave spherical shape, which is formed at a first end 101a of primary plunger 101 facing the outside of hollow body 100 and is arranged to substantially fit a head (not shown) of the push rod.

The primary spring keeping primary plunger 101 spaced from secondary plunger 102 is mounted between a second end 101b of primary plunger 101, facing primary chamber 125, and a first end 102a of secondary plunger 102, also facing primary chamber 125.

Primary spring 106 is a spring preloaded by means of a primary preload sub-assembly, which preferably includes a primary preload case 108 and a primary preload pin 109.

Primary preload case 108 is a hollow case having a base kept against the second end 101b of primary plunger 101 by primary spring 106, and a head, in distal position relative to the base, having a hole 129.

Primary preload pin 109 has a first end fixedly secured, e.g., screwed, to the first end 102a of secondary plunger 102 and, at the other end, a widened head 127 located inside primary preload case 108.

Primary preload pin 109 and primary preload case 108 are arranged to cooperate with each other by sliding one inside the other through hole 129, so as to take a plurality of positions between an initial rest position (shown in the Figure), in which widened head 127 abuts against the head of case 108, and an end position, in which widened head 127 is close to the second end 101b of primary plunger 101.

In the initial rest position mentioned above, the second end 101b of primary plunger 101 and the first end 102a of secondary plunger 102 are at a maximum distance, determined by primary preload case 108 and primary preload pin 109. Since such a distance is shorter than the length of primary spring 106 at rest, the latter is consequently in a preloaded condition.

The primary preload sub-assembly preferably further includes a locating cup 110, abutting against the first end 102a of secondary plunger 102 and intended to receive the head of primary preload case 108 when case 108 and pin 109 are in the end position mentioned above.

The elements forming the primary preload sub-assembly preferably have cylindrical symmetry about longitudinal axis X - X.

Preferably, an atmospheric O-ring 105 and a primary O-ring 103a are housed within suitable circumferential recesses formed in hollow body 100 and facing the inside thereof.

More particularly, atmospheric O-ring 105 is located between a non-closed end of hollow body 100 and a primary supply duct 118 radially formed in hollow body 100.

Primary supply duct 118 is arranged to establish communication between a primary supply circuit and the inside of hollow body 100, in particular primary chamber 125, and it preferably ends in a circumferential recess 131 provided in hollow body 100 and facing the inside thereof.

Atmospheric O-ring 105 is arranged to cooperate with the surface of primary plunger 101 sliding in contact with hollow body 100, so as to ensure tightness between circumferential recess 131, and hence primary supply duct 118, and the outside of tandem master cylinder 10, which generally is at atmospheric pressure.

Primary O-ring 103a is located between primary supply duct 118 and primary chamber 125 and is arranged to cooperate with the surface of primary plunger 101 sliding in contact with hollow body 100, so as to build a cutoff valve, of a kind known per se, between primary supply duct 118 and primary chamber 125. More particularly, primary O-ring 103a allows connecting primary supply duct 118 to primary chamber 125, through an opening 133 in primary plunger 101, when primary plunger 101 is in the initial rest position mentioned above and shown in the Figure, and cuts off such a connection, by cooperating with primary plunger 101, when the latter starts moving inside hollow body 100 due to the actuation of the respective pedal.

In accordance with the present invention, the primary balancing system of tandem master cylinder 10 includes a primary balancing duct 115 and a primary balancing valve. More particularly, primary balancing duct 115 is formed in hollow body 100 of tandem master cylinder 10 and is configured for establishing communication between primary chamber 125 of tandem master cylinder 10 and a primary balancing channel (not shown in the Figure), in turn communicating with a respective primary balancing duct and a primary chamber of the second tandem master cylinder of the assembly.

More particularly, primary balancing duct 115 ends in hollow body 100 in a circumferential recess 128, provided in hollow body 100 and facing the inside thereof, which is located at a region occupied by secondary plunger 102 when the latter is in an initial rest position, shown in the Figure.

Preferably, circumferential recess 128 where primary balancing duct 115 ends is located between two further circumferential recesses in hollow body 100, in which a primary balancing O-ring 116a and an O-ring 116b are housed. Such O-rings 116a, 116b are configured so that, by cooperating with the surface of secondary plunger 102 sliding in contact with hollow body 100, they also ensure tightness between primary balancing duct 115 and primary chamber 125 and between primary balancing duct 115 and a secondary balancing duct 119, respectively: The later duct will be described in more detail later on.

Preferably, O-ring 116b can have a toroidal diameter greater than O-ring 116a and can be housed in a circumferential recess having a wider portion on its side proximal to primary balancing duct 115 and a narrower portion on the other side. Such a constructional detail allows O-ring 116b to act as an absorber, i.e., in case of a pressure increase in primary balancing duct 115, the O-ring is compressed towards the narrower portion, thereby making available, in the circumferential recess, space for the pressurised fluid in primary balancing duct 115 and limiting in this manner the pressure increase.

Primary balancing O-ring 116a and secondary plunger 102 form together the primary balancing valve, which allows connecting primary balancing duct 115 and primary chamber 125 when, upon actuation of the pedal, secondary plunger 102 travels a predetermined portion of its stroke inside hollow body 100 such that it no longer cooperates in fluid-tight manner with primary balancing O-ring 116a.

Moreover, when primary plunger 101 continues its stroke up to primary balancing O-ring 116a, a longitudinal groove 120 provided in primary plunger 101, between primary plunger 101 and hollow body 100, allows not closing the communication between primary balancing duct 115 and primary chamber 125, at least until primary plunger 101 arrives close to the end of its stroke, in which region balancing is no longer useful, since the tandem system compensates itself.

Secondary spring 107 keeping secondary plunger 102 spaced from bottom 135 of hollow body 100 is mounted between said bottom 135 and a second end 102b of secondary plunger 102, facing secondary chamber 126.

Secondary spring 107 is a spring preloaded by a secondary preload sub-assembly, which preferably includes a secondary preload case 111 and a secondary preload pin 114, the case and the pin preferably having cylindrical symmetry about longitudinal axis X - X.

Secondary preload case 111 is a hollow case having a base kept against the second end 102b of secondary plunger 102 by secondary spring 107, and a head, in distal position relative to the base, having a hole 130.

Secondary preload pin 114 has a first end fixedly secured, e.g. through a screwing terminal 121, to bottom 135 of hollow body 100, and a head, located inside secondary preload case 111, on which a stop ring (also known as circlip or Seeger ring) 113 is mounted.

Preferably, a containment case 138 having the shape of a hollow cylinder, coaxial with longitudinal axis X - X, is fitted, for instance with clearance, within secondary preload case 111, near the head thereof. Such a containment case 138, the function of which will be explained later on, is held in position, in the axial direction, on the one side by means of the head of secondary preload case 111 and on the other side by means for instance of suitable lugs 122 formed on an internal surface of secondary preload case 111.

Secondary preload pin 114 is arranged to cooperate with secondary preload case 111 and containment case 138 by sliding inside them through hole 130, so as to take a plurality of positions between an initial rest position (shown in the Figure), in which stop ring 113 abuts against containment case 138, in turn abutting against the head of secondary preload case 111, and an end position, in which the head of secondary preload pin 114 is close to the second end 102b of secondary plunger 102.

In the initial rest position mentioned above, the second end 102b of secondary plunger 102 and bottom 135 of hollow body 100 are at a maximum mutual distance, determined by secondary preload case 111, containment case 138 and secondary preload pin 114. Since such a distance is shorter than the length of secondary spring 107 at rest, the latter is consequently in preloaded condition.

Tandem master cylinder 10 further includes a secondary balancing system, including a secondary balancing duct 136 and a secondary balancing valve. Secondary balancing duct 136 is formed within secondary preload pin 114 and has a first end, near bottom 135 of hollow body 100, connected to a secondary balancing channel 117, in turn communicating with a respective secondary balancing duct and a secondary chamber of the second tandem master cylinder of the assembly. A second end of secondary balancing duct 136, located close to the head of secondary preload pin 114 and hence in distal position relative to bottom 135 of hollow body 100, ends with at least one radial hole 137, e.g. with two radial holes.

In accordance with the present invention, a secondary balancing O-ring 112, facing the inside of containment case 138, is fitted in containment case 138 and is arranged to cooperate, in fluid-tight manner, with secondary preload pin 114, and more particularly with radial holes 137 of secondary balancing duct 136, so as to form the secondary balancing valve, which allows establishing communication between secondary balancing duct 136 and secondary chamber 126. More particularly, said valve is closed when secondary balancing O-ring 112 obstructs radial holes 137, i.e. when secondary plunger 102 is in its initial rest position mentioned above, and opens when the secondary plunger has travelled a predetermined portion of its stroke, due to the actuation of the pedal, such that secondary balancing O-ring 112 no longer obstructs radial holes 137.

Preferably, moreover, a secondary supply duct 119 is radially formed in hollow body 100 and is arranged to establish communication between a secondary supply circuit and the inside of hollow body 100, in particular secondary chamber 126, by preferably ending in a circumferential recess 132 provided in hollow body 100 and facing the inside thereof. Preferably, circumferential recess 132 is located in an intermediate position between bottom 135 of hollow body 100 and primary balancing duct 115

Preferably, a first secondary O-ring 103a is housed within a suitable circumferential recess formed in hollow body 100 and facing the inside thereof, between secondary supply duct 119 and secondary chamber 126. Such a first secondary O-ring 103b is arranged to cooperate with the surface of secondary plunger 102 sliding in contact with hollow body 100, so as to build a cutoff valve, of a kind known per se. That valve allows connecting secondary supply duct 119 and secondary chamber 126, through an opening 134 in secondary plunger 102, when secondary plunger 101 is in the initial rest position mentioned above and shown in the Figure, and cuts off such a connection when secondary plunger 102 starts moving inside hollow body 100 due to the actuation of the pedal.

Tandem master cylinder 10 preferably further includes a secondary O-ring 104 located in a suitable circumferential recess provided in hollow body 100 and facing the inside thereof. Secondary O-ring 104 is arranged to cooperate in fluid-tight manner with the surface of secondary plunger 102 sliding in contact with hollow body 100, so as to ensure tightness between circumferential recess 132, and hence secondary supply duct 119, and primary supply duct 115.

In accordance with a variant of the preferred embodiment, O-ring 116b could possibly be dispensed with and its function could be performed by O-ring 104 disclosed above.

Primary chambers of both tandem master cylinders of the assembly are hydraulically connected to a respective primary utilising device, for instance a right rear brake and a left rear brake of a farm vehicle or the like.

Similarly, secondary chambers of the tandem master cylinders of the assembly are hydraulically connected to a respective secondary utilising device, for instance a right front brake and a left front brake of the farm vehicle or the like.

Each one of the primary and secondary chambers is connected to the respective utilising device in known manner, through a primary outlet opening and a secondary outlet opening (not shown), respectively, formed in hollow body 100.

Hereinafter, the method of balancing the primary control pressures present in the primary chambers of both tandem master cylinders of the assembly and the secondary control pressures present in the secondary chambers of both tandem master cylinders of the assembly will be disclosed in different situations of use and in case of malfunctions.

In case a single pedal, and hence a single tandem master cylinder, is actuated, initially the resistance offered by secondary spring 107, which preferably is lower than that of primary spring 106, is overcome. At the same time, through the cooperation of the push rod, primary plunger 101 and primary spring 106, plungers 101 and 102 of tandem master cylinder 10 simultaneously move, thanks to the lower resistance offered by secondary spring 107 in comparison to primary spring 106, thereby opening the balancing valves of the tandem master cylinder being actuated. When a single tandem master cylinder of the assembly is actuated, since the primary and secondary balancing valves of the tandem master cylinder that is not being actuated remain closed, no fluid passage occurs between primary chambers 125 and secondary chambers 126 of the tandem master cylinders through balancing ducts 115 and 136 and the balancing channels.

Subsequently, a further displacement of plungers 101 and 102 of tandem master cylinder 10 causes simultaneous closure, apart from constructional tolerances, of the fluid communication between supply ducts 118, 119 and the primary and secondary chambers 125 and 126, respectively, thereby generating primary and secondary control pressures, respectively, in said chambers.

If a malfunction in primary control pressure delivery towards the associated primary utilising device occurs in primary chamber 125, primary plunger 101 compresses primary spring 106 by abutting against the secondary plunger and pushing it. Thus, a secondary control pressure is anyway generated in secondary chamber 126 and will be transmitted to the secondary utilising device. This feature is particularly appreciated in a braking system for farm vehicles. Indeed, if pressure delivery to the primary utilising device, e.g. the right or the left rear brake of the farm vehicle, has a malfunction, at least the secondary utilising device, for instance the front brake on the same side as the malfunctioning rear brake, can intervene.

Similarly, if a malfunction in secondary control pressure delivery towards the associated secondary utilising device occurs in secondary chamber 126, secondary plunger 102 compresses secondary spring 107 by abutting against bottom 135 of hollow body 100. Yet, this does not prevent generation of a primary control pressure in primary chamber 126, which will be transmitted to the primary utilising device.

If the pedals associated with both tandem master cylinders of the assembly are actuated, the primary and secondary plungers of both master cylinders generate a control pressure in the respective primary and secondary chambers. Moreover, all balancing valves open and, through such valves, fluid passes between the primary chambers of both tandem master cylinders, through primary balancing ducts 115 of the respective tandem master cylinders and the primary balancing channel, as well as between the secondary chambers of both tandem master cylinders, through secondary balancing ducts 136 of the respective tandem master cylinders and the secondary balancing channel. In this manner, a balancing between the primary control pressures generated in the primary chambers and the secondary control pressures generated in the secondary chambers is jointly achieved.

When a malfunction in primary control pressure delivery towards the associated primary utilising device occurs in a primary chamber of one of the tandem master cylinders, primary plunger 101 compresses primary spring 106 and pushes secondary plunger 102 with a consequent opening of the primary balancing valve, which remains open thanks to the provision of longitudinal groove 120. In this manner, a balancing between the primary control pressures supplied by the primary chambers of both tandem master cylinders is obtained, and the lengthening of the stroke of the malfunctioning primary plunger is moreover limited.

This balancing method is particularly appreciated in a braking system for farm vehicles. Indeed, let us assume that a drop occurs in the primary control pressure taken by the fluid contained in one of the primary chambers and directed, for instance, to one of the rear brakes. In such case, the fact that the balancing of primary control pressures outgoing from the primary cambers is anyway made possible allows in any case balanced actuation of the rear brakes.

Similarly, if a malfunction in secondary control pressure delivery towards the associated secondary utilising device occurs in a secondary chamber of one of the tandem master cylinders, a similar advantageous situation occurs in which the primary control pressure generated in the primary chamber pushes the secondary plunger, with a consequent opening of the secondary balancing valve. In this manner, a balancing of the secondary control pressures is achieved.

Of course, obvious modifications and/or changes to the above description are possible, in respect of the sizes, the shapes, the components, the connections and the contacts, of the assembly of the tandem master cylinders disclosed and in the method of balancing them without thereby departing from the invention as defined in the following claims.

For instance, even though the preceding description refers to tandem master cylinders without a servo-control function, the cylinders could be equipped with a servo-control function, as it is well known to the skilled in the art, for instance by means of a brake booster with parallel axes of the "single block" type, or by means of two separate brake boosters, one for each tandem master cylinder.

## Claims

1. Pressure balancing system for a pair of tandem master cylinders (10), each of said tandem master cylinders comprising within a hollow body (100):
- a primary plunger (101),
- a secondary plunger (102),
- a primary chamber (125), between said primary plunger (101) and said secondary plunger (102),
- a secondary chamber (126), between said secondary plunger (102) and a bottom (135) of the hollow body (100), and
- a secondary preload sub-assembly, arranged within said secondary chamber (126) and comprising a secondary preload pin (114) and a secondary preload case (111),
said pressure balancing system comprising within each of said tandem master cylinders (10)
- a primary balancing system comprising
- a primary balancing duct (115) provided in the hollow body (100) of the tandem master cylinder (10), which primary balancing duct (115) communicates a primary balancing channel located between the pair of tandem master cylinders with the inside of the hollow body (100) at a region occupied by the secondary plunger (102) when said secondary plunger is in an initial rest position,
- a primary balancing o-ring (116a) arranged for forming a primary balancing valve between the primary balancing duct (115) and the primary chamber (125), said primary balancing valve being closed when the secondary plunger (102) is in said initial rest position, and
**characterised by** being arranged for opening when the secondary plunger (102) travels a predetermined portion of its stroke;
and in that said pressure balancing system comprises, within each of said tandem master cylinders (10)
- a secondary balancing system comprising
- a secondary balancing duct (136) provided within the secondary preload pin (114) and having a first end connected to a secondary balancing duct (117) located between the pair of tandem master cylinders and a second end ending with at least one radial hole (137),
- a secondary balancing o-ring (112), which is fixed to the secondary preload case (111) and is arranged for forming, by cooperating in a tight manner with said at least one radial hole (137) of the secondary balancing duct (136), a secondary balancing valve between the secondary balancing duct (136) and the secondary chamber (126), said secondary balancing valve being closed when the secondary plunger (102) is in said initial rest position and being arranged for opening when the secondary plunger travels a predetermined portion of its stroke such that the secondary balancing o-ring (112) does not obstruct said at least one radial hole (137) any longer.

2. Pressure balancing system according to claim 1, wherein said secondary balancing o-ring (112) is fitted in a containment case (138) mounted within the secondary preload case (111).

3. Pressure balancing system according to claim 2, wherein said containment case (138) is held in position, along the axial direction, by means of specific lugs (122) formed on an internal surface of the secondary preload case (111).

4. Pressure balancing system according to any of the preceding claims, wherein the primary balancing o-ring (116a) is housed in a circumferential recess provided in the hollow body (100) and forms the primary balancing valve by cooperating in a tight manner with a surface of the secondary plunger (102) which slides in contact with the hollow body (100).

5. Pressure balancing system according to any of the preceding claims, wherein an o-ring (116b) housed in a circumferential recess provided in the hollow body (100) is arranged for cooperating in a tight manner with a surface of the secondary plunger (102) so as to assure a sealing contact between the primary balancing duct (115) and a secondary supply duct (119) of the secondary chamber (126).

6. Pressure balancing system according to any of the preceding claims, wherein a longitudinal groove (120) is provided in the primary plunger (101), between the primary plunger (101) and the hollow body (100), and, when the primary plunger (101) continues its stroke up to the primary balancing o-ring (116a), is arranged for not closing the communication between the primary balancing duct (115) and the primary chamber (125), at least until the primary plunger (101) is close to the end of its stroke.

7. Method for operating a pressure balancing system for a pair of tandem master cylinders (10), each of said tandem master cylinders comprising, within a hollow body (100), a primary plunger (101), a secondary plunger (102), a primary chamber (125) and a secondary chamber (126);
said method comprising the steps of
- actuating a pedal of each of said tandem master cylinder,
- sliding the primary and secondary plunger (101, 102) of each of said tandem master cylinders (10),
- opening, in each of said tandem master cylinders (10), a primary balancing valve between the primary chamber (125) and a primary balancing duct (115), **characterised by**
- opening, in each of said tandem master cylinders (10), a secondary balancing valve between the secondary chamber (126) and a secondary balancing duct (136) provided within a respective secondary preload pin (114), so that a secondary balancing o-ring (112), fixed to a respective secondary preload case (111), does not cooperate in a tight manner with th e secondary balancing duct (136) any longer, by virtue of the sliding of the secondary plunger (102) and, therefore, of the secondary preload case (111) fixed to the secondary plunger (102),
- mutually balancing, in a stroke-controlled manner, primary control pressures generated in the primary chambers (125) and mutually balancing secondary control pressures generated in the secondary chambers (126), by opening the primary and secondary balancing valve, respectively,
further comprising the step of
- holding the primary balancing valve open, in each of said tandem master cylinders (10), when the primary plunger (101) continues its stroke up to primary balancing o-ring (116a), by means of a longitudinal groove (120) provided in the primary plunger (101).

8. Method according to claim 7, wherein said step of opening a primary balancing valve provides for sliding the secondary plunger (102) so that said secondary plunger does not cooperate in a tight manner with the primary balancing o-ring (116a) any longer.

## Patentansprüche

1. Druckregulierungssystem für ein Paar von Tandemhauptzylindern (10), wobei jeder der Tandemhauptzylinder Folgendes in einem Hohlkörper (100) aufweist:
- einen Primärkolben (101),
- einen Sekundärkolben (102),
- eine Primärkammer (125) zwischen dem Primärkolben (101) und dem Sekundärkolben (102),
- eine Sekundärkammer (126) zwischen dem Sekundärkolben (102) und einem Boden (135) des Hohlkörpers (100), und
- eine sekundäre Vorspannungsunterbaugruppe, die in der Sekundärkammer (126) angeordnet ist und einen sekundären Vorspannstift (114) und eine sekundäre Vorspannhülse (111) aufweist,
wobei das Druckregulierungssystem in jedem der Tandemhauptzylinder (10) Folgendes aufweist
- ein primäres Regulierungssystem, das Folgendes aufweist
- einen primären Regulierungsdurchlass (115), der in dem Hohlkörper (100) des Tandemhauptzylinders (10) bereitgestellt ist, wobei der primäre Regulierungsdurchlass (115) mit einem primären Regulierungskanal in Verbindung steht, der zwischen dem Paar von Tandemhauptzylindern innerhalb des Hohlkörpers (100) in einem Bereich angeordnet ist, in dem sich der Sekundärkolben (102) befindet, wenn sich der Sekundärkolben in einer anfänglichen Ruheposition befindet,
- einen primären Regulierungs-O-Ring (116a), der derart angeordnet ist, dass ein primäres Regulierungsventil zwischen dem primären Regulierungsdurchlass (115) und der Primärkammer (125) gebildet ist, wobei das primäre Regulierungsventil geschlossen ist, wenn sich der Sekundärkolben (102) in der anfänglichen Ruheposition befindet, und
**dadurch gekennzeichnet, dass** es angeordnet ist, sich zu öffnen, wenn der Sekundärkolben (102) einen vorbestimmten Abschnitt seines Hubs zurücklegt;
und dass das Druckregulierungssystem in jedem der Tandemhauptzylinder (10) Folgendes aufweist
- ein sekundäres Regulierungssystem, das Folgendes aufweist
- einen sekundären Regulierungsdurchlass (136), der in dem sekundären Vorspannstift (114) bereitgestellt ist und ein erstes Ende, das mit einem sekundären Regulierungsdurchlass (117) verbunden ist, der zwischen dem Paar von Tandemhauptzylindern angeordnet ist, und ein zweites Ende, das mit mindestens einer radialen Öffnung (137) endet, aufweist,
- einen sekundären Regulierungs-O-Ring (112), der an der sekundären Vorspannhülse (111) fixiert und angeordnet ist, durch abdichtendes Zusammenwirken mit der mindestens einen radialen Öffnung (137) des sekundären Regulierungsdurchlasses (136) ein sekundäres Regulierungsventil zwischen dem sekundären Regulierungsdurchlass (136) und der Sekundärkammer (126) auszubilden, wobei das sekundäre Regulierungsventil geschlossen ist, wenn sich der Sekundärkolben (102) in der anfänglichen Ruheposition befindet, und angeordnet ist, sich zu öffnen, wenn der Sekundärkolben einen vorbestimmten Abschnitt seines Hubs zurücklegt, sodass der sekundäre Regulierungs-O-Ring (112) nicht mehr die mindestens eine radiale Öffnung (137) blockiert.

2. Druckregulierungssystem nach Anspruch 1, wobei der sekundäre Regulierungs-O-Ring (112) in einer Aufnahmehülse (138) angebracht ist, die in der sekundären Vorspannhülse (111) angebracht ist.

3. Druckregulierungssystem nach Anspruch 2, wobei die Aufnahmehülse (138) entlang der axialen Richtung mittels spezieller Ösen (122), die auf einer Innenfläche der sekundären Vorspannhülse (111) ausgebildet sind, in Position gehalten ist.

4. Druckregulierungssystem nach einem der vorhergehenden Ansprüche, wobei der primäre Regulierungs-O-Ring (116a) in einer umlaufenden Aussparung aufgenommen ist, die in dem Hohlkörper (100) bereitgestellt ist, und das primäre Regulierungsventil durch abdichtendes Zusammenwirken mit einer Fläche des Sekundärkolbens (102) ausbildet, der sich in Kontakt mit dem Hohlkörper (100) verschiebt.

5. Druckregulierungssystem nach einem der vorhergehenden Ansprüche, wobei ein O-Ring (116b), der in einer in dem Hohlkörper (100) bereitgestellten umlaufenden Aussparung aufgenommen ist, angeordnet ist, abdichtend mit einer Fläche des Sekundärkolbens (102) derart zusammenzuwirken, dass ein abdichtender Kontakt zwischen dem primären Regulierungsdurchlass (115) und einem sekundären Zuführungsdurchlass (119) der Sekundärkammer (126) sichergestellt ist.

6. Druckregulierungssystem nach einem der vorhergehenden Ansprüche, wobei eine Längsnut (120) in dem Primärkolben (101) zwischen dem Primärkolben (101) und dem Hohlkörper (100) bereitgestellt ist, und, wenn der Primärkolben (101) seinen Hub nach oben zu dem primären Regulierungs-O-Ring (116a) fortsetzt, angeordnet ist, die Verbindung zwischen dem primären Regulierungsdurchlass (115) und der Primärkammer (125) nicht zu schließen, zumindest bis sich der Primärkolben (101) nahe an dem Ende seines Hubs befindet.

7. Verfahren zum Betreiben eines Druckregulierungssystem für ein Paar von Tandemhauptzylindern (10), wobei jeder der Tandemhauptzylinder in einem Hohlkörper (100) einen Primärkolben (101), einen Sekundärkolben (102), eine Primärkammer (125) und eine Sekundärkammer (126) aufweist;
wobei das Verfahren die folgenden Schritte umfasst
- Betätigen eines Pedals jedes der Tandemhauptzylinder,
- Schieben des Primär- und Sekundärkolbens (101, 102) jedes der Tandemhauptzylinder (10),
- Öffnen, in jedem der Tandemhauptzylinder (10), eines primären Regulierungsventils zwischen der Primärkammer (125) und einem primären Regulierungsdurchlass (115), **gekennzeichnet durch**
- Öffnen, in jedem der Tandemhauptzylinder (10), eines sekundären Regulierungsventils zwischen der Sekundärkammer (126) und einem sekundären Regulierungsdurchlass (136), der in einem jeweiligen sekundären Vorspannstift (114) bereitgestellt ist, sodass ein sekundärer Regulierungs-O-Ring (112), der an einer jeweiligen sekundären Vorspannhülse (111) fixiert ist, durch das Schieben des Sekundärkolbens (102) und somit der an dem Sekundärkolben (102) fixierten sekundären Vorspannhülse (111), nicht mehr abdichtend mit dem sekundären Regulierungsdurchlass (136) zusammenwirkt,
- gegenseitiges Regulieren, auf hubgesteuerte Weise, von in den Primärkammern (125) erzeugten primären Steuerdrücken, und gegenseitiges Regulieren von in den Sekundärkammern (126) erzeugten sekundären Steuerdrücken, durch Öffnen des primären bzw. sekundären Regulierungsventils,
ferner umfassend den folgenden Schritt
- Geöffnethalten des primären Regulierungsventils in jedem der Tandemhauptzylinder (10), wenn der Primärkolben (101) seinen Hub nach oben zu dem primären Regulierungs-O-Ring (116a) fortsetzt, mittels einer in dem Primärkolben (101) bereitgestellten Längsnut (120).

8. Verfahren nach Anspruch 7, wobei der Schritt des Öffnens eines primären Regulierungsventils Schieben des Sekundärkolbens (102) derart bereitstellt, dass der Sekundärkolben nicht mehr abdichtend mit dem primären Regulierungs-O-Ring (116a) zusammenwirkt.

## Revendications

1. Système d'équilibrage de pression pour une paire de maîtres-cylindres en tandem (10), chacun desdits maîtres-cylindres en tandem comprenant dans un corps creux (100) :
un piston primaire (101),
un piston secondaire (102),
une chambre primaire (125), entre ledit piston primaire (101) et ledit piston secondaire (102),
une chambre secondaire (126), entre ledit piston secondaire (102) et une partie inférieure (135) du corps creux (100), et
un sous-ensemble de précharge secondaire, disposé à l'intérieur de ladite chambre secondaire (126) et comprenant une broche de précharge secondaire (114) et un boîtier de précharge secondaire (111),
ledit système d'équilibrage de pression comprenant dans chacun desdits maîtres-cylindres en tandem (10)
un système d'équilibrage primaire comprenant
un conduit d'équilibrage primaire (115) disposé dans le corps creux (100) du maître-cylindre en tandem (10), lequel conduit d'équilibrage primaire (115) établit la communication d'un canal d'équilibrage primaire situé entre la paire de maîtres-cylindres en tandem avec l'intérieur du corps creux (100) au niveau d'une région occupée par le piston secondaire (102) lorsque ledit piston secondaire est dans une position de repos initiale,
un joint torique d'équilibrage primaire (116a) conçu pour former une soupape d'équilibrage primaire entre le conduit d'équilibrage primaire (115) et la chambre primaire (125), ladite soupape d'équilibrage primaire étant fermée lorsque le piston secondaire (102) est dans ladite position de repos initiale, et **caractérisée en ce qu'**elle est conçue pour s'ouvrir lorsque le piston secondaire (102) parcourt une partie prédéfinie de sa course ;
et **en ce que** ledit système d'équilibrage de pression comprend, à l'intérieur de chacun desdits maîtres-cylindres en tandem (10)
un système d'équilibrage secondaire comprenant
un conduit d'équilibrage secondaire (136) disposé à l'intérieur de la broche de précharge secondaire (114) et ayant une première extrémité reliée à un conduit d'équilibrage secondaire (117) situé entre la paire de maîtres-cylindres en tandem et une seconde extrémité se terminant par au moins un trou radial (137),
un joint torique d'équilibrage secondaire (112), qui est fixé au boîtier de précharge secondaire (111) et est conçu pour former, en coopérant de manière étanche avec ledit au moins un trou radial (137) du conduit d'équilibrage secondaire (136), une soupape d'équilibrage secondaire entre le conduit d'équilibrage secondaire (136) et la chambre secondaire (126), ladite soupape d'équilibrage secondaire étant fermée lorsque le piston secondaire (102) est dans ladite position de repos initiale et étant conçue pour s'ouvrir lorsque le piston secondaire parcourt une partie prédéfinie de sa course de sorte que le joint torique d'équilibrage secondaire (112) n'obstrue plus ledit au moins un trou radial (137).

2. Système d'équilibrage de pression selon la revendication 1, ledit joint torique d'équilibrage secondaire (112) étant disposé dans un boîtier de confinement (138) monté dans le boîtier de précharge secondaire (111).

3. Système d'équilibrage de pression selon la revendication 2, ledit boîtier de confinement (138) étant maintenu en position, le long de la direction axiale, au moyen de pattes (122) spécifiques formées sur une surface interne du boîtier de précharge secondaire (111).

4. Système d'équilibrage de pression selon l'une quelconque des revendications précédentes, le joint torique d'équilibrage primaire (116a) étant disposé dans un retrait circonférentiel pratiqué dans le corps creux (100) et formant la soupape d'équilibrage primaire en coopérant de manière étanche avec une surface du piston secondaire (102) qui coulisse en contact avec le corps creux (100).

5. Système d'équilibrage de pression selon l'une quelconque des revendications précédentes, un joint torique (116b) logé dans un retrait circonférentiel pratiqué dans le corps creux (100) étant conçu pour coopérer de manière étanche avec une surface du piston secondaire (102) de sorte à assurer un contact étanche entre le conduit d'équilibrage primaire (115) et un conduit secondaire (119) de la chambre secondaire (126).

6. Système d'équilibrage de pression selon l'une quelconque des revendications précédentes, une rainure longitudinale (120) étant située dans le piston primaire (101), entre le piston primaire (101) et le corps creux (100), et, lorsque le piston primaire (101) continue sa course jusqu'au joint torique d'équilibrage primaire (116a), étant conçue pour ne pas fermer la communication entre le conduit d'équilibrage primaire (115) et la chambre primaire (125), au moins jusqu'à ce que le piston primaire (101) soit proche de la fin de sa course.

7. Procédé pour utiliser un système d'équilibrage de pression pour une paire de maîtres-cylindres en tandem (10), chacun desdits maîtres-cylindres en tandem comprenant, dans un corps creux (100), un piston primaire (101), un piston secondaire (102), une chambre primaire (125) et une chambre secondaire (126) ;
ledit procédé comprenant les étapes consistant à
actionner une pédale de chacun desdits maîtres-cylindres en tandem,
faire coulisser les pistons primaire et secondaire (101, 102) de chacun desdits maîtres-cylindres en tandem (10),
ouvrir, dans chacun desdits maîtres-cylindres en tandem (10), une soupape d'équilibrage primaire entre la chambre primaire (125) et un conduit d'équilibrage primaire (115), **caractérisé par** les étapes consistant à
ouvrir, dans chacun desdits maîtres-cylindres en tandem (10), une soupape d'équilibrage secondaire entre la chambre secondaire (126) et un conduit d'équilibrage secondaire (136) situé dans une broche de précharge secondaire respective (114), de sorte qu'un joint torique d'équilibrage secondaire (112), fixé sur un boîtier de précharge secondaire (111) respectif, ne coopère plus de manière étanche avec le conduit d'équilibrage secondaire (136), du fait du coulissement du piston secondaire (102) et donc du boîtier de précharge secondaire (111) fixé au piston secondaire (102),
équilibrer mutuellement, d'une manière commandée par la course, des pressions de commande primaires générées dans les chambres primaires (125) et équilibrer mutuellement des pressions de commande secondaires générées dans les chambres secondaires (126), en ouvrant respectivement les soupapes d'équilibrage primaire et secondaire,
comprenant en outre l'étape consistant à
maintenir la soupape d'équilibrage primaire ouverte, dans chacun desdits maîtres-cylindres en tandem (10), lorsque le piston primaire (101) continue sa course jusqu'au joint torique d'équilibrage primaire (116a), au moyen d'une rainure longitudinale (120) disposée dans le piston primaire (101).

8. Procédé selon la revendication 7, ladite étape d'ouverture d'une soupape d'équilibrage primaire permettant de faire coulisser le piston secondaire (102) de sorte que ledit piston secondaire ne coopère plus de manière étanche avec le joint torique d'équilibrage primaire (116a).
